# EUROPEAN PATENT SPECIFICATION

(11) **EP 3 348 472 B1**
(45) Date of publication and mention of the grant of the patent: **30.10.2019**
(21) Application number: 17382019.2
(22) Date of filing: 17.01.2017
(51) Int. Cl.: B64C 23/06

(54) **LIFTING SURFACE**
HUBOBERFLÄCHE
SURFACE DE LEVAGE

(43) Date of publication of application: 18.07.2018
(73) Proprietor: Airbus Operations, S.L., 28906 Getafe Madrid (ES)
(72) Inventor: GARCÍA NIETO, Carlos, 28906 Getafe (ES); VÉLEZ DE MENDIZÁBAL ALONSO, Iker, 28906 Getafe (ES); CRESPO PEÑA, Soledad, 28906 Getafe (ES); GUINALDO FERNÁNDEZ, Enrique, 28906 Getafe (ES); VÁZQUEZ CASTRO, Jesús Javier, 28906 Getafe (ES); TORRES SALAS, Álvaro, 28906 Getafe (ES)
(74) Representative: Elzaburu S.L.P.

(56) References cited:
- EP-A1- 2 543 588
- EP-A1- 2 801 521
- EP-A1- 3 053 827
- US-A- 4 039 161
- US-A- 5 253 828
- US-A- 6 105 904

## Description

### Field of the invention

The invention is related to a lifting surface having vortex generators in its surface.

### Background of the invention

A vortex generator is an aerodynamic surface, consisting of a small vane or bump that creates a vortex. Vortex generators delay flow separation and aerodynamic stalling thus improving the effectiveness of lifting/control surfaces.

Vortex generators are positioned in such a way that they have an angle of attack with respect to the local airflow. A vortex generator creates a tip vortex which draws energetic, rapidly-moving air from outside the slow-moving boundary layer into contact with the aircraft skin. The boundary layer normally thickens as it moves along the aircraft surface, reducing the effectiveness of trailing-edge control surfaces. Vortex generators can be used to remedy this problem, among others, by re-energizing the boundary layer allowing the airfoil to operate at higher angles-of-attack without airflow separation.

In terms of aircraft operability, the main benefits of using these devices apply to:
- Increment in maximum take-off weight.
- Increment in maximum landing weight.
- Aircraft noise reduction.
- Efficiency increment of aircraft control surfaces.

Although vortex generators are known and have been used for over many years, they continue being one of the most effective flow control devices. Nevertheless, it is also known that if they are fixed for improving performance in one flight regimen, they use to penalize the performance in other operational conditions.

It is known document US5253828 disclosing a concealable flap actuated vortex generator for generating a vortex on a lifting surface assembly, and an improved aircraft flight lifting surface having such concealable flap actuated vortex generators. When the flap of the lifting surface assembly is in the nominal (non-extended or non-deflected) position, the vortex generator is unexposed. When the flap is actuated by a flap actuator, the flap is extended or deflected from the nominal position, thereby projecting or exposing the vortex generator into an operational position and enabling the generation of a vortex.

It is also known document EP2543588 disclosing a device and methods for low speed performance improvement of a lifting surface assembly. At least one vortex generator is coupled to the lifting surface assembly, and the vortex generator is extended through the lifting surface assembly by drooping a hinged leading edge device coupled to the lifting surface assembly to increase lift. The vortex generator is retracted inside the lifting surface assembly to decrease drag.

It is also known document US4039161 disclosing an improvement to the controllability of aircraft wherein vortex generators are connected to a control surface in front of the hinge line of the control surface so that when the control surface is deflected, the vortex generators project into the airstream on the opposite side from the deflecting control surface. The action of the vortex generators causes the airflow to remain attached to the control surface at higher angles of attack than would otherwise be possible thus increasing the lift of the airfoil and control surface.

It is also known document EP3053827 disclosing a vertical stabilizer for an aircraft, comprising a fin, a pivotable rudder, a rudder adjustment arrangement for adjusting the angular position of the rudder, a vortex generator arrangement which comprises, on each side of the fin, at least one turbulence generation element, wherein each turbulence generation element is disposed in a surface section of the fin and is mounted moveably between a first, retracted position, in which it is retracted into an interior space of the fin, and a second, extended position, in which it projects at least partially outwardly from the fin transversely with respect to the surface section, and a turbulence generation element adjustment arrangement which is coupled to the rudder.

It is known document EP2801521 disclosing a vortex generator that may include a flap; a bearing configured to be mounted on a surface; an axle retained in the bearing, the flap attached to the axle such that the flap rotates relative to the bearing about the axle; and an actuator made of a shape memory alloy attached to the flap and to a support, the actuator shaped to receive the axle therethrough, such that a change in temperature of the actuator causes the actuator to rotate the flap relative to the bearing.

It is known document US6105904 disclosing a deployable flow control device for a flow surface over which fluid having a fluid boundary layer flows which fluid boundary layer exhibits certain dynamics is disclosed. The deployable flow control device comprises a flow effector which is movably attached to a housing which is attachable, either initially or retrofitably, to a flow surface. The flow effector can position in a modular sub-housing removably attachable to the housing. The flow effector is deployed into and retracted out of the boundary layer on the flow surface and thereby controls the boundary layer dynamics. Devices (including devices utilizing a sealable, flexible element) operably connect to the flow effector and deploy and retract it. The sealable, flexible element has two elastic states defined as quiescent and deformed such that, when the sealable, flexible element is utilized, the flow effector is deployed into and retracted out of the fluid boundary layer based upon the elastic state of the sealable, flexible element.

### Summary of the invention

The lifting surface object of the invention is disclosed in the claim 1.

The movable discontinuities are located at the torsion box trailing edge at the trailing edge panels. Therefore, vortex generators "appear" at the trailing edge panels depending on the flight regime.

### Description of the figures

To complete the description and in order to provide for a better understanding of the invention, a set of drawings is provided. Said drawings form an integral part of the description and illustrate preferred embodiments of the invention. The drawings comprise the following figures.

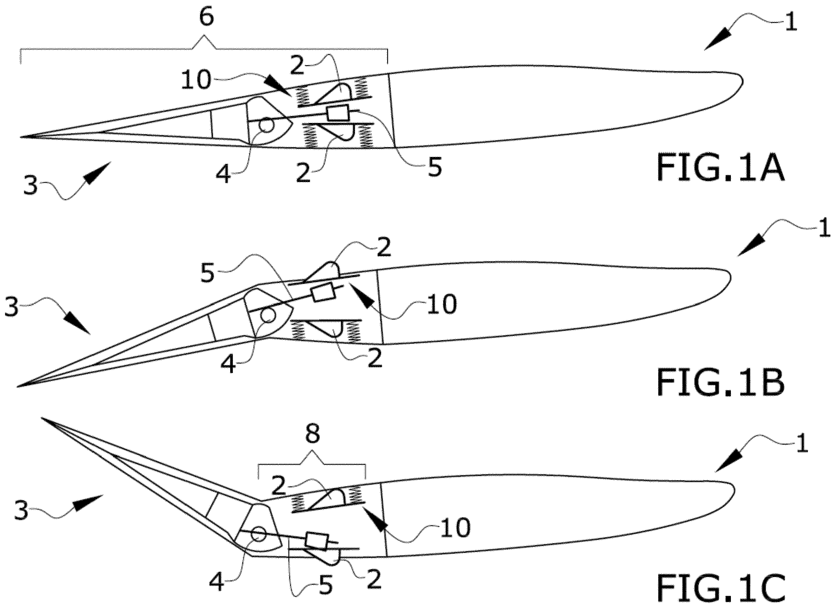

Figures 1 show a cross section of an embodiment which is not according to the present invention of a lifting surface having a trailing edge and an elevator in three different positions.
Figures 2 show a cross section of an embodiment of a lifting surface according to the present invention having a trailing edge and an elevator in three different positions.
Figure 3 shows a schematic perspective view of another embodiment according to the invention of the discontinuity being pressed by the bar.

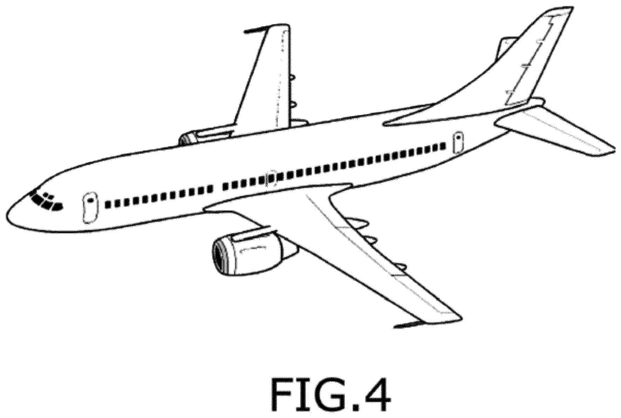

Figure 4 shows a schematic perspective view of an aircraft having a lifting surface according to the invention.

### Detailed description of the invention

Figures shows an embodiment in which some openings (10) are located on the trailing edge (6) in order to allow the movable discontinuities (2) to come out when the elevator (3) rotates. More specifically, the movable discontinuity (2) is located in the trailing edge panels (8) of the lifting surface (1). This first embodiment has the disadvantage of impacting aerodynamics due to the openings (10) at the trailing edge (6).

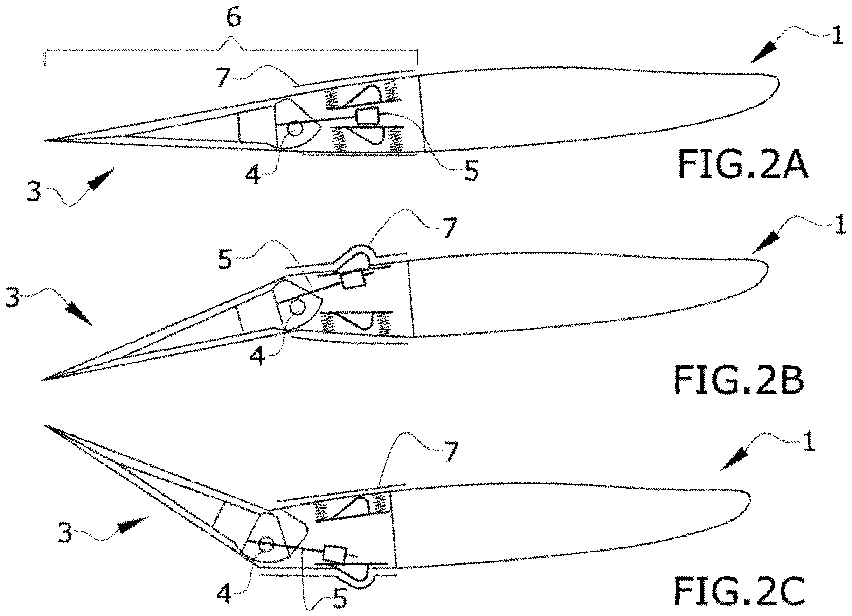

Figure 2 shows an embodiment in which a flexible skin (7) is included at the vortex generators affected area in order to mitigate the aerodynamic impact due to the openings (10).

Upper and lower trailing edge panels (8) are manufactured with flexible skins (7) of aramid, nylon, polyester or other fabrics, stiff enough to avoid unallowable deformations and flexible enough to change their position according with the inner kinematic of the vortex generators elements.

In this embodiment the movable discontinuity (2) therefore comprises two different elements, an intermediate element that is pushed by the bar (5) and the flexible skin (7) that is in turn pushes by said intermediate element.

Preferably, the element to which the bar (5) is attached is the front spar of the elevator (3). The front spar is sufficiently rigid and does not move relative to the other elements of the elevator (3), so that the movement of the bar (5) is made jointly with the movement of the elevator (3).

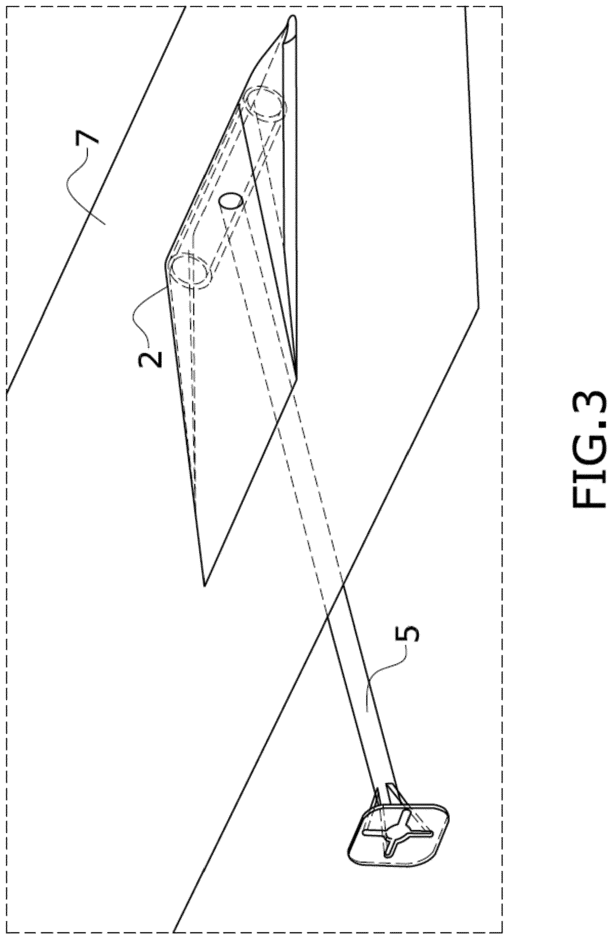

Figure 3 shows an additional embodiment comprising a flexible skin (7) but in this embodiment the end of the bar (5) is adapted to produce the deformation in the flexible skin (7) by having a corresponding shape. In the shown embodiment the end of the bar (5) comprises a cilindrical element having its longitudinal axis perpendicular to the axis of the bar (5).

Although all the three shown embodiments shows that the bar (5) pushes the movable discontinuity (2) such that it comes out from the surface of the lifting surface (1) forming a protuberance another possibility exists wherein the bar (5) pull the movable discontinuity (2) such that it comes in from the surface of the lifting surface (1) forming a recess in the surface.

The movable discontinuity (2) would preferably be located in the surface of the lifting surface (1) more appropriate for the stability and control of the aircraft, for instance, in the face having a negative pressure gradient or what is the same, wherein the suction pressures are produced instead than in the positive pressures face of the lifting surface (1).

Note that vortex generators shapes can be different (rectangular, triangular, ogive, parabolic, gothic, inverse triangular, ...).

## Claims

1. Lifting surface (1) comprising:
• a movable discontinuity (2) located in the surface of the lifting surface (1), the movable discontinuity (2) being movable between:
∘ an active position in which the movable discontinuity (2) acts as vortex generator, and
∘ a passive position in which the movable discontinuity (2) is integrated into the surface of the lifting surface (1) without acting as vortex generator,
• an elevator (3), the elevator (3) being rotatable around a hinge line (4) with respect to the rest of the lifting surface(1),
• a bar (5) rigidly joined to the elevator (3),
the bar (5), the elevator (3) and the movable discontinuity (2) being configured such that when the elevator (3) rotates with respect to the rest of the lifting surface (1), the bar (5) moves the movable discontinuity (2) that deploys from the surface of the lifting surface (1) acting as a vortex generator, the movable discontinuity (2) being located in a trailing edge panel (8) of the rest of the lifting surface (1),
**characterised in that** the movable discontinuity (2) comprises a flexible skin (7), an upper and a lower trailing edge panels (8) being manufactured with flexible skins (7) of aramid, nylon, polyester or other fabrics and wherein the movable discontinuity additionally comprises an intermediate element adapted to be moved by the bar (5) and that in turn it moves the flexible skin (7) or wherein the end of the bar (5) comprises a shape according to the deformation to be produced on the flexible skin (7).

2. Lifting surface (1), according to any preceding claim, wherein the bar (5) is joined to the front spar of the elevator (3).

3. Lifting surface (1), according to any preceding claim, wherein the surface of the lifting surface (1) comprises an opening (10) for the movable discontinuity (2) to come out from the lifting surface (1) for acting as vortex generator.

4. Lifting surface (1), according to claim 1, wherein the end of the bar (5) comprises a cilindrical element having its longitudinal axis perpendicular to the axis of the bar (5).

5. Lifting surface (1), according to any preceding claim, wherein the bar (5) pushes the movable discontinuity (2) such that it comes out from the surface of the lifting surface (1) forming a protuberance.

6. Lifting surface (1), according to any preceding claim from 1 to 3, wherein the bar (5) pull the movable discontinuity (2) such that it comes in from the surface of the lifting surface (1) forming a recess.

7. Aircraft, comprising a lifting surface (1) according to any preceding claim.

## Patentansprüche

1. Hubfläche (1), die umfasst:
• eine bewegbare Diskontinuität (2), die in der Fläche der Hubfläche (1) angeordnet ist, wobei die bewegbare Diskontinuität (2) bewegbar ist zwischen:
∘ einer aktiven Position, in der die bewegbare Diskontinuität (2) als Vortexgenerator fungiert, und
∘ einer passiven Position, in der die bewegbare Diskontinuität (2) in die Fläche der Hubfläche (1) integriert ist, ohne als Vortexgenerator zu fungieren,
• eine Hebeeinrichtung (3), wobei die Hebeeinrichtung (3) relativ zu dem Rest der Hubfläche (1) um eine Gelenklinie (4) herum drehbar ist,
• eine Stange (5), die starr mit der Hebeeinrichtung (3) verbunden ist,
wobei die Stange (5) und die bewegbare Diskontinuität (2) derart ausgebildet sind, dass dann, wenn sich die Hebeeinrichtung (3) relativ zu dem Rest der Hubfläche (1) dreht, die Stange (5) die bewegbare Diskontinuität (2) bewegt, die sich aus der Fläche der Hubfläche (1) herausbewegt und als Vortexgenerator fungiert, wobei die bewegbare Diskontinuität (2) in einem hinteren Randpanel (8) des Rests der Hubfläche (1) angeordnet ist,
**dadurch gekennzeichnet, dass**
die bewegbare Diskontinuität (2) eine flexible Haut (7) aufweist, wobei ein oberes und ein unteres hinteres Randpanel (8) mit den flexiblen Häuten (7) aus Aramid, Nylon, Polyester oder anderen Stoffen hergestellt sind und wobei die bewegbare Diskontinuität ferner ein Zwischenelement umfasst, das derart ausgebildet ist, dass es von der Stange (5) bewegt wird und das wiederum die flexible Haut (7) bewegt, oder wobei das Ende der Stange (5) eine Form aufweist, die der auf der flexiblen Haut zu produzierenden Verformung entspricht.

2. Hubfläche (1) nach einem der vorhergehenden Ansprüche, bei der die Stange (5) mit dem vorderen Holm der Hebeeinrichtung (3) zusammengefügt ist.

3. Hubfläche (1) nach einem der vorhergehenden Ansprüche, bei der die Fläche der Hubfläche (1) eine Öffnung (10) umfasst, durch die die bewegbare Diskontinuität (2) aus der Hubfläche (1) heraustritt, um als Vortexgenerator zu fungieren.

4. Hubfläche (1) nach Anspruch 1, bei der das Ende der Stange (5) ein zylindrisches Element aufweist, dessen Längsachse senkrecht zu der Achse der Stange (5) ist.

5. Hubfläche (1) nach einem der vorhergehenden Ansprüche, bei der die Stange (5) die bewegbare Diskontinuität (2) derart drückt, dass sie aus der Fläche der Hubfläche (1) heraustritt und Vorsprünge bildet.

6. Hubfläche (1) nach einem der vorhergehenden Ansprüche 1 bis 3, bei der die Stange (5) die bewegbare Diskontinuität (2) derart zieht, dass sie aus der Fläche der Hubfläche (1) heraustritt und Ausnehmungen bildet.

7. Flugzeug, das eine Hubfläche (1) nach einem der vorhergehenden Ansprüche umfasst.

## Revendications

1. Surface de levage (1) comprenant :
• une discontinuité mobile (2) positionnée dans la surface de la surface de levage (1), la discontinuité mobile (2) étant mobile entre :
∘ une position active dans laquelle la discontinuité mobile (2) sert de générateur de tourbillon, et
∘ une position passive dans laquelle la discontinuité mobile (2) est intégrée dans la surface de la surface de levage (1) sans servir de générateur de tourbillon,
• un élévateur (3), l'élévateur (3) pouvant tourner autour d'une ligne de charnière (4) par rapport au reste de la surface de levage (1),
• une barre (5) rigidement assemblée à l'élévateur (3),
la barre (5), l'élévateur (3) et la discontinuité mobile (2) étant configurés de sorte que lorsque l'élévateur (3) tourne par rapport au reste de la surface de levage (1), la barre (5) déplace la discontinuité mobile (2) qui se déploie de la surface de la surface de levage (1) servant de générateur de tourbillon, la discontinuité mobile (2) étant positionnée dans un panneau de bord de fuite (8) du reste de la surface de levage (1),
**caractérisée en ce que** la discontinuité mobile (2) comprend un revêtement souple (7), des panneaux de bord de fuite supérieur et inférieur (8) étant fabriqués avec des revêtements souples (7) d'aramide, de Nylon, de polyester ou d'autres tissus et dans laquelle la discontinuité mobile comprend de plus un élément intermédiaire adapté pour être déplacé par la barre (5) et déplacer à son tour le revêtement souple (7), ou bien dans laquelle l'extrémité de barre (5) comprend une forme selon la déformation à produire sur le revêtement souple (7).

2. Surface de levage (1) selon l'une quelconque des revendications précédentes, dans laquelle la barre (5) est assemblée au longeron avant de l'élévateur (3).

3. Surface de levage (1) selon l'une quelconque des revendications précédentes, dans laquelle la surface de la surface de levage (1) comprend une ouverture (10) pour que la discontinuité mobile (2) sorte de la surface de levage (1) pour servir de générateur de tourbillon.

4. Surface de levage (1) selon la revendication 1, dans laquelle l'extrémité de la barre (5) comprend un élément cylindre ayant son axe longitudinal perpendiculaire à l'axe de la barre (5).

5. Surface de levage (1) selon l'une quelconque des revendications précédentes, dans laquelle la barre (5) pousse la discontinuité mobile (2) de sorte qu'elle sort de la surface de la surface de levage (1), en formant une protubérance.

6. Surface de levage (1) selon l'une quelconque des revendications précédentes 1 à 3, dans laquelle la barre (5) tire la discontinuité mobile (2) de sorte qu'elle provient de la surface de la surface de levage (1) formant un évidement.

7. Aéronef comprenant une surface de levage (1) selon l'une quelconque des revendications précédentes.
